# EUROPEAN PATENT APPLICATION

(11) **EP 3 493 132 A1**
(43) Date of publication of application: **05.06.2019**
(21) Application number: 18203073.4
(22) Date of filing: 29.10.2018
(51) Int. Cl.: G06Q 20/06, G06Q 20/32

(54) **SYSTEM AND METHODS FOR USING KINETIC ENERGY TO ASSIGN COINS EXCHANGED FOR CRYPTOCURRENCY**

(30) Priority: 04.12.2017 US 201715830661
(71) Applicant: Vieri, Riccardo, 50025 Montespertoli (FI) (IT)
(72) Inventor: Vieri, Riccardo, 50025 Montespertoli (FI) (IT)
(74) Representative: Fanfani, Stefano

(57) **Abstract**

A system and methods directed to crypto coins based on kinetic energy produced by human movement, allowing decentralized distribution of the cryptocurrencies. The decentralized system and methods operates with a very low or no consumption of current, and may further harvest kinetic energy, saving electrical power such as electricity power, battery power and the like.

## Description

### FIELD OF INVENTION

The present invention relates to the field of blockchain technology and cryptocurrency. More specifically, the invention is directed to a decentralized distribution of cryptocurrency based on kinetic energy of a user.

### BACKGROUND

Cryptocurrency is a digital or virtual currency that is encrypted or secured using cryptography. Cryptography refers to the use of encryption techniques to secure and verify the transfer of the transfer of transactions. The cryptocurrency market is growing rapidly and attracting savings for new investors every day.

The first coin in the world, Bitcoin, has reached unimaginable values and has also dragged other cryptocurrencies to success. Bitcoin is a cryptocurrency which transacts on a secure decentralized ledger. The decentralized ledger is distributed throughout an open network. The ledger is known as the blockchain allowing participants in the network to transact using Bitcoin without the need of a trusted third party, such as a bank. In other words, blockchain is directed to the underlying technology for cryptocurrencies - it is the whole ledger. The blockchain contains all the transactions, or "blocks", completed since the beginning of the ledger.

A blockchain is a digitized, decentralized, public ledger of all cryptocurrency transactions. Constantly growing as 'completed' blocks (the most recent transactions) are recorded and added to it in chronological order, it allows market participants to keep track of digital currency transactions without central recordkeeping. Each node (a computer connected to the network) gets a copy of the blockchain, which is downloaded automatically. All confirmed transactions are included in the blockchain and available to the user through a wallet application. The wallet application communicates a user's cryptocurrency balance, history of transactions, and verifies cryptocurrencies owned by the user. This way, Bitcoin wallets can calculate their spendable balance and new transactions can be verified to be spending Bitcoins that are owned by the spender.

A cryptocurrency wallet is a software program or application that stores private and public keys and interacts with various blockchain to enable users to send and receive digital currency and monitor their balance. Digital wallets are required to use cryptocurrency. Cryptocurrencies don't get stored in any single location or exist anywhere in any physical form. All that exists are records of transactions, or "blocks", stored on the blockchain. To be able to spend those coins and unlock the funds, the private key stored in the wallet must match the public address the currency is assigned to. Again, there is no actual exchange of tangible money. The transaction is signified merely by a transaction record, i.e., "block", on the blockchain and a change in balance in the cryptocurrency wallet.

The most common categorization of cryptocurrency is known as coins or tokens. The term "coin" refers to Bitcoin as well as other alternative coins such as Centurion, Ethereum, Namecoin, Peercoin, Ripple, Litecoin, and Dogecoin. The term "token" refers to a particular asset or utility, that usually resides on top of another blockchain. Tokens can represent basically any assets that are fungible and tradeable, from commodities to loyalty points to even other cryptocurrencies. For purposes of this application, the term "coin" and "token" are used interchangeably with the understanding that each may operate on their own separate blockchain or operate on top of a blockchain that facilitates the creation of decentralized applications.

The integrity and the chronological order of the blockchain are enforced with cryptography. Separately, it also prevents double spending, stealing and the forging of value. The financial services industry, beyond looking at the potential of cryptocurrencies, has recently turned its attention to using the blockchain ledger separate from Bitcoin or other cryptocurrencies and applying it to other processes and products.

Blockchain systems are global state systems wherein the global state is stored across a distributed number of devices. These blockchain systems typically operate on cryptocurrency networks such as Bitcoin, Ripple, Namecoin, among others. A combination of public/private key cryptography and hash chains provides a mechanism to store arbitrary secure states as a single ledger-the blockchain-held at all distributed nodes. Nodes update their local state based on "proof of work" hashing algorithms applied to the system. These systems provide a secure mechanism for establishing shared common ground across many devices.

The cryptocurrencies to be produced require "mining", a system that, thanks to the use of hardware devices, and with specific algorithms, can allocate coins produced in blocks, sharing them between users, based on a power of calculation.

The most common cryptocurrency allocation systems to mine cryptocurrencies depends on a "proof of work" system. A "proof of work" is a piece of data which is difficult (costly, time-consuming) to produce but easy for others to verify and which satisfies certain requirements. Producing a proof of work can be a random process with low probability so that a lot of trial and error is required on average before a valid proof of work is generated. Bitcoin uses the Hashcash proof of work system that limits email spam and denial-of-service attacks, and forms part of the mining algorithm.

Since most cryptocurrencies use ever more powerful machines, the energy consumed to produce cryptocurrencies increases each day. To date, in an interesting but still limited market, current consumption to mine Bitcoin is soon very likely to be closed to the whole state of Denmark.

Also, some Internet Technology (IT) corporations have created powerful device (like Asics and Baikal) that are able to outperform any other device in terms of hash power. This reduces the chances for every user that has one Personal Computer (PC) to mine most well-known and appreciated cryptocurrencies. This fact indicates that if this market becomes bigger, the energy consumptions needed to produce cryptocurrencies may become very high and totally adverse to the ecosystem.

It is true that today, there are other systems for allocating cryptocurrencies in alternative ways, which are eco-friendlier. One of these is to pre-mine the coins. In this case the coins are produced wholly or partially from the beginning.

But this particular case presents several disadvantages. Coins have been overtaken frightening users and investors because they are centralized, e.g., owners of coins can buy them from the market cashing down prices. Non-minable coins are often launched through an Initial Coin Offering (ICO), a fundraising system that is not regulated and can create many problems with no guarantees for people who buy cryptocurrencies.

Another issue in this industry is that the distribution of cryptocurrencies is far from a decentralization possession. Like most aspects of finance, a high percentage of wealth is in the hands of a small percentage of people.

In addition, the only cryptocurrency allocation system today occurs with electronic, static means requiring a standard power supply (110-220 V). Electronic cryptocurrency allocation systems do not promote physical wellness. Thus, there is a need for a system and methods which could allow mobile phones to mine coins using light algorithms, saving energy. However, at present, smart phone hardware is not yet powerful enough to make this possible.

There is also a need for a system that allows a distribution of coins that is eco-sustainable.

There is another need for a system that uses an alternative energy source to allocate and distribute coins.

There is a further need for a truly decentralized system that does not allow only a few privileged users to own most of the cryptocurrencies themselves.

There's a need to create a cryptocurrency decentralized assignment and distribution process which does not use a power supplied system, but involves a mobile power supply with external sources like lithium ion or solar cell or any renewable energy source.

There is also a need for methods where the cryptocurrency assignment is correlated to activities promoting human health.

### SUMMARY OF THE INVENTION

This disclosure is not limited to the particular systems, and methodologies described herein, as there can be multiple possible embodiments of the present disclosure which are not expressly illustrated. It is also understood that the terminology used in the description is for describing the versions or embodiments only, and is not intended to limit the scope of the invention.

The present invention provides a system and methods that assigns cryptocurrencies based on kinetic energy produced by human movement, allowing decentralized distribution of the cryptocurrencies. The invention also contemplates harvesting the kinetic energy associated with the human movement and using it thereby saving electrical energy such as electricity power, battery power and the like.

Although the invention is discussed with respect to kinetic energy according to movement of a user, it is also contemplated that the invention may be directed to and/or include other parameters such as consumed calories, altitude, geographical terrain, food choices, time of eating, type of mobile device used, type of sensors used, etc.

The present invention provides a system and methods for assigning one or more cryptocurrencies in time intervals by using human physical power via a blockchain distributed network. One or more sensors are used to detect human movement. The sensors are operatively coupled to a mobile device that includes a mobile application. Human power shares are calculated from the sensor data related to movement of a user. A human power share is the kinetic energy recorded as sensor data and multiplied by a predetermined power share value.

Human power shares are converted into coins that are exchanged to cryptocurrency using a blockchain server. The data server receives the human power shares calculated by the mobile application of the mobile device and assigns coins However, it is contemplated that the data server receives the sensor data related to movement and calculates the human power shares. The coins are sent to a blockchain server that exchanges the coins to cryptocurrency. The blockchain server sends the cryptocurrency to the user's wallet via a wallet application. The wallet application is accessible through the user's mobile device, for example on the display unit.

The invention comprises a mobile device interacting over a network with one or more sensors, a data server, and a blockchain server. The sensors may be built-in the mobile device or external to, but in communication with, the mobile device. The data server includes a software program to calculate a number of coins assigned that are exchanged to cryptocurrency through a blockchain server. Although the invention is discussed in reference to the data server assigning a number of coins, it contemplated any server and/or device such as the mobile device, alone or in combination, may be used to determine the number of coins assigned.

The system and methods of the invention may operate over a global area network (GAN), such as the Internet, a wide area network (WAN), a local area network (LAN), or any other type of network, or combination of networks. It is contemplated that short range communication such as that between the sensors and mobile device may be accomplished through infrared (IR), radio frequency (RF), Bluetooth technology, near field communication (NFC), ultraband or Zigbee.

According to the invention, a mobile device may generate data using sensors with or without a network connection. If a network connection is not available, data can be stored and transmitted upon availability of a working connection.

It is also contemplated that invention may incorporate penalties or rewards, for example adding coins or deducting coins used to exchange for cryptocurrency. Penalties or rewards may be related to a "task" or an "assignment", i.e., action items a user must perform or complete, such as within a predefined interval of time. For example, a display unit of a mobile device can display an assignment as provided by the data server. An example of assignment may be for the user to maintain a body health parameter within a threshold level. Body health parameters may include, for example, heart pressure level, sugar level, blood pressure level, weight, body mass index value, body fat percentage, etc. Another example may be a task requiring physical activity such as dancing, exercise, visiting interesting places such as a particular store or shopping mall, use of renewable energy sources, etc. Yet another example may be penalties or rewards for a particular type of mobile device used or specific type of sensor. As an example, 10 additional coins may be transferred to a user's wallet application if a pressure sensor is used. Another example may be additional coins assigned when a smart watch is used that reduces detection errors versus a smart phone. Another example may be coins added or deducted from a user's wallet application based on results of a light sensor, e.g., whether a user's movement is during the daytime or nighttime. In certain embodiments, the invention may utilize a user's silhouette, particularly the physical form. As an example, a user's silhouette is compared at two different time periods. If the silhouette improved (i.e., smaller), additional coins may be assigned. Hence the invention improves physical well-being by promoting physical activity such as walking.

According to the invention, completion of an assignment can be verified. For example, verification may be based on the amount of human power shares generated for the assignment. If a task requires production of at least 10 human power shares and the user only produces 5, the task remains incomplete which may cause 10 coins to be deducted from a user's wallet application.

Detection errors may also be reduced through a sensor that detects a distance between the user and the mobile device. Detection sensors can be internal or external to the mobile device and used to determine physical contact between the device and the human body.

It is also contemplated that errors caused by non-human motion can be reduced by validating the movement detected based on perceived parameters of a user such as heartbeat, breath or temperature. In certain embodiments, the invention includes software and or device filters that exclude virtuous manipulations by users, or automatic replacement of detection errors of human movements. For example, speed per second can be measured, deviation from an axis used with a gyroscope and other parameters, a number of steps and displacements relative to an axis in a specific time period, continuity of working hours, or other statistical factors. More specifically, motion detection may only be considered valid if sweat sensors detect sweat during an exercise assignment, tactile sensors are used, or if human presence is detected with passive infrared (PIR) sensors.

The present invention may also include an advertisement server. The advertisement server facilitates targeted advertising based on the sensor data, for example the type of movement made by a user. The advertisement server is adapted to access the database of data server. Based on the data accessed, the advertisement server is selects and sends a targeted advertisement - text, image, video, audio - to the user mobile device. Targeted advertisements may be determined based on a task or assignment, type of sensors used, data recorded, type of human movement, etc. For example, users that run or jog receive sporting goods advertisements whereas tireless walkers receive advertisements on wearable tracking devices. This information can then be used to create a detailed user profile.

It is also contemplated that a user may have priority in a product or service purchase system as determined by human power shares assigned over a period of time. Instead of exchanging for cryptocurrency, the coins may be exchanged for a product or service or for vouchers redeemable for a product or service. Furthermore, priority in purchasing the product at a favorable price may be determined. For example, a product typically valued at 100 coins is offered at 50 coins to those users that achieve a minimum number of power shares during a specified time frame, i.e., 100 power shares in 60 minutes. It is also contemplated that priority in a product or service purchase system may be associated with an auction forum in which the assigned coins can be used to bid on products or services.

It is also contemplated that a percentage of assigned coins may be automatically allocated to one or more entities, such as a humanitarian organization.

One important aspect of the invention is that it provides a decentralized system. The invention also provides a decentralized system that operates with a very low or no consumption of current. Additionally, the decentralized system may be used without having to supply personal data that could compromise the security of system.

The invention is also adaptable to work with any existing or new cryptocurrency network.

It is contemplated that system and methods of the invention includes administration that may directed to any agreement including the type and number of coins assigned. For example, each user may have a certain share of coins, which can be exchanged for any cryptocurrency subject to the agreement.

It is contemplated the invention promotes cryptocurrency education, i.e., users may learn about coins, how they may be exchanged for cryptocurrency, details of the exchange market, etc.

Another important aspect of the invention is that kinetic energy of a user can be stored and used to extend the battery life of a mobile device. Kinetic energy recorded by sensors may be transmitted to a server using mobile batter power or a power supply of renewable energy.

The invention further contemplates a distribution policy that considers time constraints to ensure decentralization and a degree of casualty typical of the current mining system. With mining "proof of work", coin allocation is based on the power of the device used and the random process used to produce the "proof of work".

It is also contemplated that the invention may provide a comparison of the energy savings between the power required to produce coins using the typical proof of work mining system versus the power required to assign coins according to the methods of the present invention.

According to an embodiment of the invention, the coin assignment may be performed according to a relationship between any of the following: randomness (number of movements in a period), effect (personal number of movements developed by a user in a fraction of time), and movement itself (type of motion that can result from running, jogging, walking, swimming, and any sport) as detected by one or more sensors.

Moreover, the invention enables a variety of statistics to be gathered regarding the assigned coins and the exchange of the coins into cryptocurrency. These statistics may be valuable for economic analysis and consumer trends.

The system and methods of the invention may also include a chat forum for communication between the users thereby creating a community of users.

The system and methods of the invention may also protect the environment from disproportionate energy consumption. As an example, an energy savings value equivalent to the production and assignment of crypto coins can be communicated to a user through a display unit thereby encouraging the user to value energy consumption.

Although the invention is discussed with respect to kinetic energy resultant from human movement, kinetic energy may also include that produced by acoustic noise and low-frequency vibrations. One practical example includes a batteryless remote control unit built-in the mobile device or remotely connected to mobile device. Power is harvested from the force that a user applies when pressing a button. The harvested energy may power a low-power circuit and transmit an infrared or wireless radio signal.

Another practical example includes pressure sensors for car tires remotely connected to the mobile device: piezoelectric energy harvesting sensors are located on or near a car tire in order to monitor pressure and transmit the information to a mobile device or a dashboard for the driver. In this example, a user is assigned coins not based on kinetic energy, but based on values of tire pressure which may maintain road safety

Yet another practical example may include piezoelectric floor tiles: kinetic energy from people walking on the floor is converted to electrical power that can be used for essential services such as display systems, emergency lighting, powering ticket gates, and more.

The invention provides many technical results. One technical result of the invention is directed to obtaining by means of a mobile device cryptocurrencies using a decentralized system with a very low consumption or no consumption of cu rrent/power.

Another technical result is directed to receiving cryptocurrency payments automatically without having to supply personal data that could compromise security of the system.

Another technical result is directed to generating data using sensors with or without a network connection, e.g., if a network connection is not available data can be stored and later sent to a server (data or blockchain) when a network connection becomes available. It is also contemplated all data of the invention may be encrypted.

Another technical result is directed to utilizing energy to extend the battery life of a mobile device.

Another technical result is directed to generating coins, utilizing data for statistical purposes including data directed to a true decentralized system and methods that secures anonymity of users. Although location data may be known, personal data is obscured. This is an important aspect of the invention since currently a truly secure decentralized system and methods is not currently available for any cryptocurrency, which may be important in the future for the cryptocurrency exchange market and financial institutions that may only accept cryptocurrencies proven to be both secure and decentralized.

The invention and its attributes and advantages may be further understood and appreciated with reference to the detailed description below of one contemplated embodiment, taken in conjunction with the accompanying drawings.

### DESCRIPTION OF THE DRAWINGS

The accompanying drawings, which are incorporated in and constitute a part of this specification, illustrate an implementation of the invention and, together with the description, serve to explain the advantages and principles of the invention:
FIG. 1 illustrates a block diagram of a system according to an embodiment of the invention.
FIG. 2 illustrates a block diagram of a data server according to an embodiment of the invention.
FIG. 3 illustrates a block diagram of a blockchain server according to an embodiment of the invention.
FIG. 4 illustrates a block diagram of a mobile device according to an embodiment of the invention.
FIG. 5 illustrates a sensor according to an embodiment of the invention.
FIG. 6 illustrates another sensor according to an embodiment of the invention.
FIG. 7 illustrates another sensor according to an embodiment of the invention.
FIG. 8 illustrates a flow chart of a method for exchanging coins assigned based on kinetic energy to cryptocurrency according to an embodiment of the invention.
FIG. 9 illustrates a flow chart of a method for calculating the number of coins assigned based on kinetic energy according to an embodiment of the invention.
FIG. 10 illustrates a screen shot of the display unit of the mobile application according to an embodiment of the invention.
FIG. 11 illustrates another screen shot of the display unit of the mobile application according to an embodiment of the invention.
FIG. 12 illustrates another screen shot of the display unit of the mobile application according to an embodiment of the invention
FIG. 13 illustrates another screen shot of the display unit of the mobile application according to an embodiment of the invention.
FIG. 14 illustrates an exemplary circuit to harvest kinetic energy according to an embodiment of the invention.
FIG. 15 illustrates a block diagram of a system including an advertisement server according to an embodiment of the invention.

### DETAILED DESCRIPTION

According to the invention, a smart phone application and smart phone sensors are used to convert human movement into human power shares. Human power shares may also be determined by the data server. Kinetic energy in the form of human movement data is recorded from the sensors during specified time intervals. The data from all devices is summed together to determine a proper calculation of a user's power shares. Depending on the number of a user's power shares, one or more coins are assigned. Then the coins are transferred to a user's wallet directly from the blockchain for exchange into cryptocurrency.

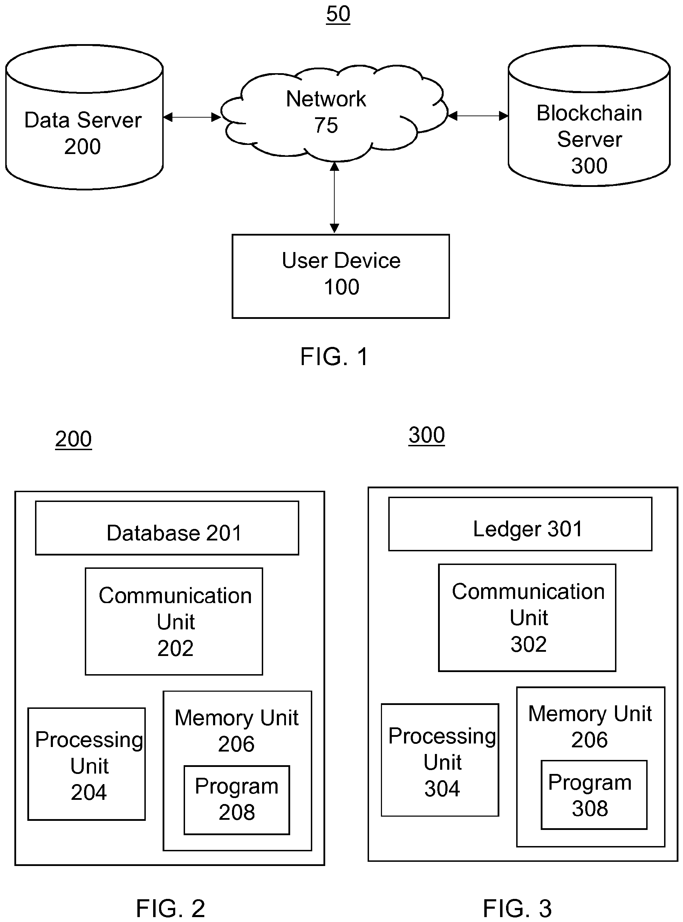

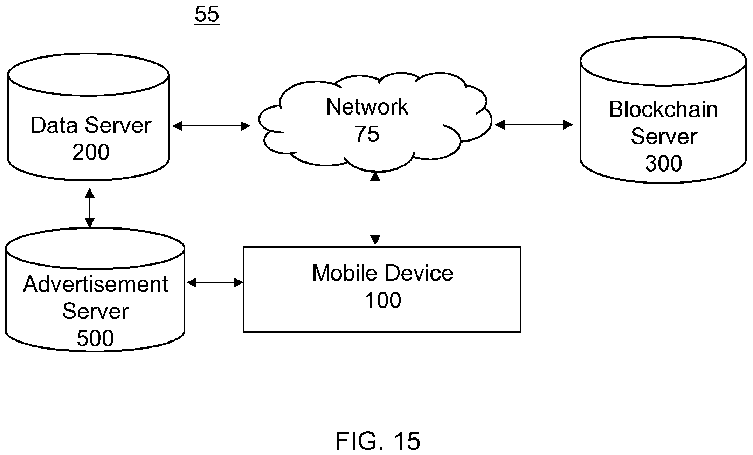

FIG. 1 illustrates a block diagram of the system 50 according to an embodiment of the invention. The system 50 comprises a mobile device 100, a data server 200, a blockchain server 300. Certain embodiments of the invention further include an advertisement server 500 as described in reference to FIG. 15. Although FIG. 1 illustrates an embodiment of the system 50 including one mobile device 100, one data server 200, and one blockchain server 300, any number and combination of devices and servers are contemplated. The mobile device 100, data server 200, and blockchain server are operatively coupled together via a network 75. It is contemplated the mobile device 100, data server 200, and blockchain server 300 communicate in real-time or according to an automatic script.

Examples of networks 75 in which the system 50 according to the invention may operate include, for example, a global area network (GAN), such as the Internet, a wide area network (WAN), a local area network (LAN), or any other type of network or combination of networks. It is contemplated that the network may provide for wire line, wireless, or a combination wire line and wireless communication between devices and servers. The network may be a system specific distributive network receiving and distributing specific network feeds and identifying specific network associated triggers.

FIG. 2 illustrates a block diagram of a data server 200 according to an embodiment of the invention. The data server 200 includes a database 201, communication unit 202, processing unit 204, and memory unit 206. The data server 200 may also include a program 208 used to assign coins exchangeable for cryptocurrency. The term "coin" is also referred to as "crypto coin", which is exchanged for cryptocurrency. The mobile device 100, data server 200, and blockchain server 300, may each include all or a portion of a software program for assigning coins. The database 201 stores data including movement data recorded by each sensor, time intervals, individual human power shares, total human power shares, number of coins assigned, type and amount of cryptocurrency exchanged for. The database 201 may also store tasks or assignments that refer to action items a user must perform or complete. The database 201 may also store a user number and/or wallet address associated with the coins and/or cryptocurrency. Any data stored in the database 201 can be communicated to the blockchain server 200 or mobile device 100 including for example, the wallet application 150 or mobile application 180 of the mobile device 100.

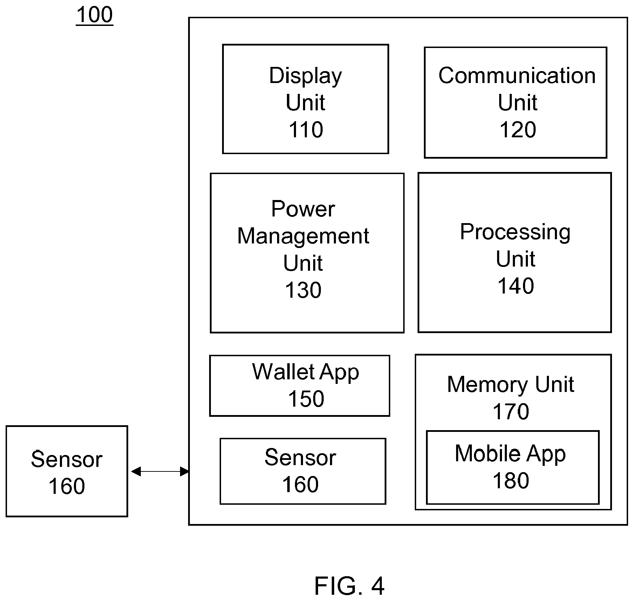

FIG. 3 illustrates a block diagram of a blockchain server 300 according to an embodiment of the invention. The blockchain server includes a distributed ledger 301, a communication unit 302, processing unit 304, and memory unit 206 including software program 308. The distributed ledger 301 stores data including, but not limited to, smart logic and rules, such as user accounts, user account resource availability, associated logic and rules, and the like. It is contemplated that the distributed ledger 301 may interact with applications having computer-executable program code and may further instruct the mobile device 100 - i.e., processing unit 140 to operate the communication unit 120 (FIG. 4) - to perform certain communication functions. It is also contemplated that the distributed ledger 301 may associate with applications having computer-executable program code and may further instruct the mobile device 100 - i.e., processing unit 140 (FIG. 4) - to perform certain logic, data processing, and data storing functions of the software program according to the invention.

An exemplary mobile device 100 is shown in FIG. 4. According to the invention, a mobile device 100 - otherwise referred to as "user device" - can be any portable electronic device capable of receiving and/or storing data, for example, any handheld device, personal digital assistant (PDA), mobile phone, smart phone, personal computing device, tablet computer, wearable devices, to name a few. Mobile device 100 includes a display unit 110, a communication unit 120, a power management unit 130, a processing unit 140, a wallet application 150, one or more sensors 160, and a memory unit 170 including mobile application 180. The mobile application 180 is executed from the memory unit 170 by the processing unit 140. The memory unit 170 may also store data, including for example, data related to the system 50 or data created and/or used by the mobile application 180.

The processing unit 140 is directed to circuitry used for implementing the communication and/or logic functions of the system. For example, processing unit 140 may include a digital signal processor device, a microprocessor device, microcontroller and various analog-to-digital converters, digital-to-analog converters, and other support circuits and/or combinations of the foregoing. It is contemplated that control and signal processing functions of the system are allocated between these processing units according to their respective capabilities.

The wallet application 150 stores private and public keys and interacts with the blockchain server 300 to enable users to send and receive cryptocurrency and monitor their balance. Although the wallet software application 150 is illustrated as part of the mobile device 100, remote wallets are also contemplated such as those stored on a server, such as the data server 200 or blockchain server 300, and accessed by the user through the network 75. It is also contemplated that the wallet software application 150 may be part of the mobile application 180 on the mobile device 100.

The communication unit 120 is used to communicate with the network 75 and other devices on the network 75, such as other mobile devices 100, data servers 200, or blockchain servers 300. As such, the communication unit 120 generally comprises any component for communicating with other devices on the network 75, for example, an antenna, a modem component, transmitter/receiver component, transponder component, infrared (IR) component, radio frequency (RF) component, Bluetooth technology component, near field communication (NFC) component, ultraband or Zigbee components.

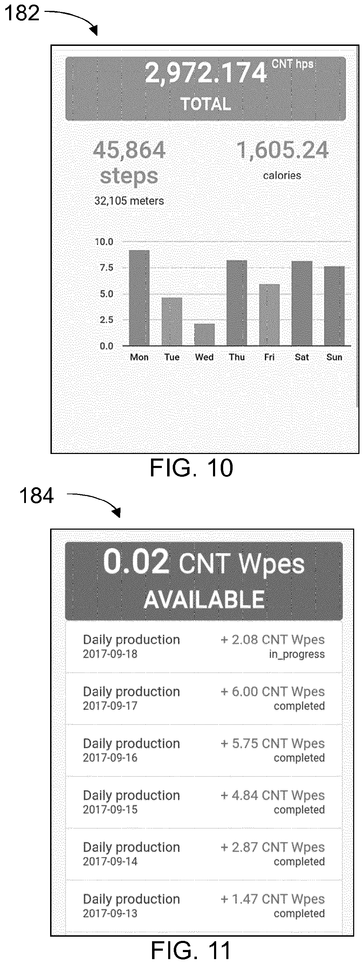

Display unit 110 may include any type of screen such as a touch screen, to visually present and communicate data related to the mobile application 180. For example, display unit 110 may illustrate interface screens as shown in the screen shots of FIGs. 10-13, discussed more fully below.

Sensor 160 detects human movement and is operatively coupled to the mobile device. One or more sensors 160 may be either built-in the mobile device 100 or external to the mobile device as shown in FIG. 4. The term "sensor" refers to any device that measures data related to movement of the human body or other parameters such as those that may require sensors to detect distance, range of motion, light, pressure, sweat, pulse, altitude, temperature, etc. Kinetic energy detected by sensors 160 may include any movement of the human body. Examples include walking, jogging, dancing, swimming, a handshake, a number of weight repetitions, leg movements, arm movements, etc.

Sensors can also be operated with or without physical contact with the human body. Sensors may include a tactile device, oximeter, mechanical device, biosensor device, electrical device, optical or probing devices. Sensors may also be comprised of an armband, wristband, glasses, gloves, or chest strap such as a heart rate monitor device. Further sensors may include Piezoelectric transducers, a kinetic energy to electrical energy converter, a camera. Other examples of sensors include, for example, a gyroscope, pedometer, accelerometer, global positioning system (GPS), magnetometer, passive infrared (PIR) device, smart watch, altimeter, barometer, etc.

The power management unit 130 harvests kinetic energy recorded by the one or more sensors 160, which may be used, for example, as electrical energy to increase the life of a mobile device battery. Harvesting kinetic energy takes different forms based on the source, amount, and type of energy being converted to electrical energy. Sources of energy may include heat, light, movement or vibration. As an example, Piezoelectric transducers produce electricity when kinetic energy is detected from vibrations, movements, sounds, heat waves or motor bearing noise such as from aircraft wings and other sources. The sensor converts the kinetic energy from vibrations or human movement into an AC output voltage and transmits it to the power management unit 130. The energy is then rectified, regulated, and stored in the mobile battery or a thin film battery or a super capacitor.

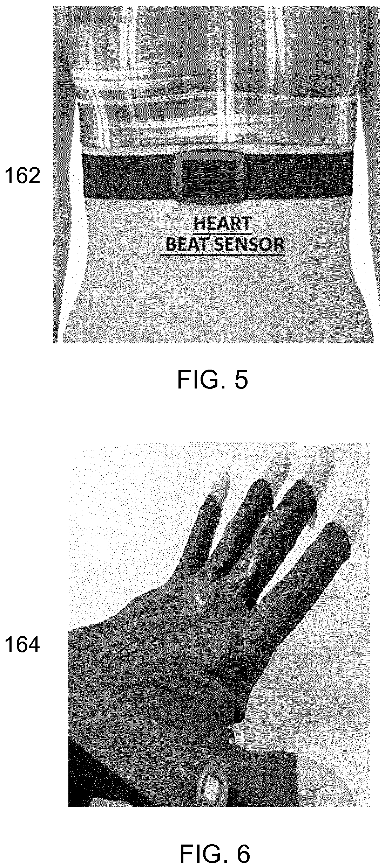

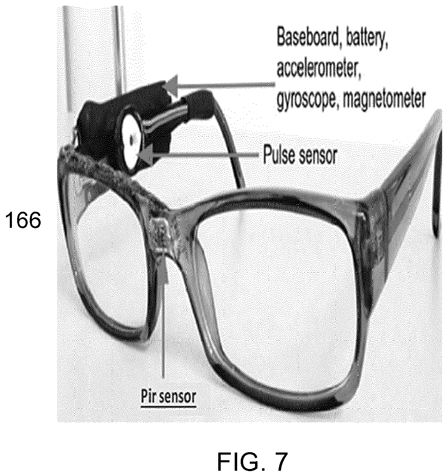

As mentioned above, one or more sensors 160 may be utilized to assign coins that are exchanged for cryptocurrency. As shown more specifically in FIG. 5, a sensor 160 is shown as a heart rate monitor 162 worn as a belt around the torso that records heart beats of a user. FIG. 6 illustrates a sensor 160 in the form of wearable gloves 164 with tactile sensors to capture data related to hand movement of the user. FIG. 7 illustrates eye glasses 166 including a PIR sensor to measure infrared (IR) light radiating from objects in its field of view, a gyroscope, an accelerometer, a magnetometer and pulse sensor.

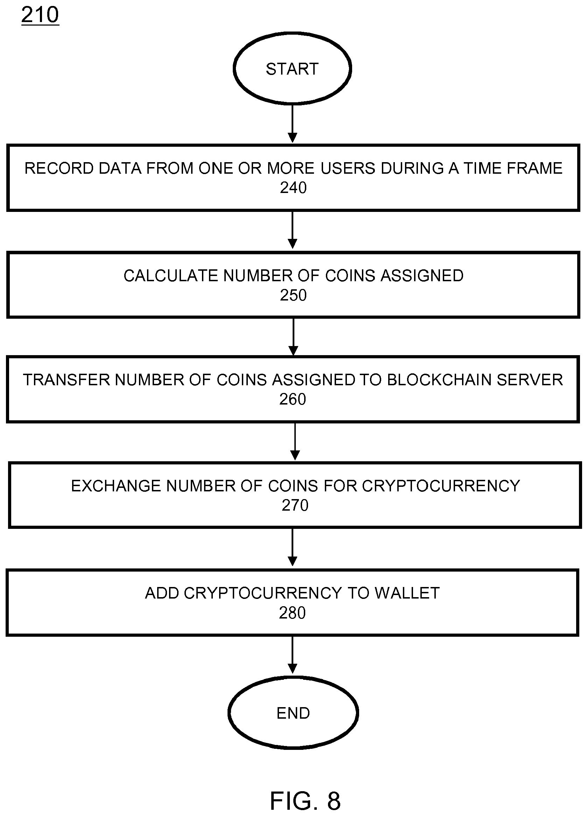

FIG. 8 illustrates a flow chart of a method 210 for exchanging coins assigned based on kinetic energy to cryptocurrency according to an embodiment of the invention.

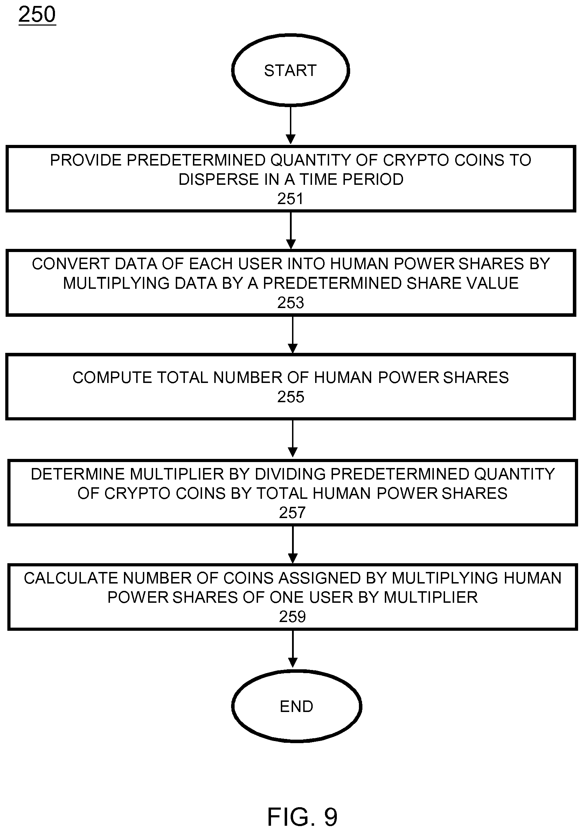

At step 240, data from one or more users is recorded by sensors during a time frame. The data may be detected from any form of movement such as a number of steps while walking or jogging, a handshake, a number of weight repetitions, etc. The time frame may be any contemplated value and is a predetermined value, e.g., 10 minutes, 24 hours, 1 week, 2 months, 5 years, etc. The number of coins assigned is calculated at step 250 described more fully in FIG. 9. According to the invention, the number of coins assigned may be calculated by either the mobile device, the data server, or the blockchain server, each alone or in combination. At step 260, the number of coins assigned is transferred to the blockchain server. The number of coins is then exchanged for cryptocurrency at step 270. At step 280, the cryptocurrency is added to a user's wallet application. FIG. 9 illustrates a flow chart of a method 250 for calculating the number of coins assigned based on kinetic energy of a user. At step 251 a predetermined quantity of crypto coins to disperse during a given time period is provided. The predetermined quantity of crypto coins can be any contemplated quantity and can change depending on coin number specifications that are included in code programming.

The number predetermined coins to be dispersed within a particular time frame can be determined based on a number of available users or the value of the cryptocurrency itself as evidenced by a cryptocurrency exchange market. For example, a market value such as that from a cryptocurrency exchange can be referenced prior to providing the predetermined quantity of crypto coins at step 251. As an example, if the value of a particular cryptocurrency is greater than 0.20 cents, the quantity of coins to be dispersed may be reduced by 10% or if the particular cryptocurrency is less than 0.10 cents, the quantity of coins to dispersed may be increased by 10%. In this case, the cryptocurrency assignment is correlated to the market value. It is also contemplated that the quantity of crypto coins dispersed in the time frame may change according to a threshold value such as when either the total human power shares or the quantity of the crypto coins dispersed surpasses the threshold value. It is also contemplated that the number of crypto coins distributed in the time frame may change according to a total number of power shares generated by movements of all users. For example, the predetermined number of coins for distribution increases when the number of power shares exceed a threshold number, or the predetermined number of coins decreases when the threshold number is not met.

At step 253, the data of kinetic energy of a user is received and converted into individual human power shares. Human power shares are kinetic energy recorded as sensor data and multiplied by a predetermined power share value. The share value may be any contemplated value as coded in the system, for example, 0.01 for every step, 0.001, or 0.0000001 to name a few. It is contemplated that the share value may also depend on the cryptocurrency and its conversion factor as determined by a coin administrator as agreed with coin founders, for example, 0.001 for Bitcoin, 0.01 for Centurion, etc. Hence a user may exchange crypto coins into any cryptocurrency. So if a user gets 100 coins, he or she could exchange them for a certain number based on the type of cryptocurrency desired, e.g. 50 in Bitcoin, 10 in Centurion, 20 in Ethereum.

At step 255 the total number of human power shares by all users is computed. A multiplier value is then determined at step 257 by dividing the predetermined quantity of crypto coins by the total number of human power shares. At step 259, individual human power shares are multiplied by the multiplier value to calculate the number of coins assigned.

To illustrate by way of example, suppose the predetermined quantity of crypto coins to be assigned in a time frame is coded in the system as 1000 crypto coins assigned every 10 minutes. Suppose one user produces 10 human power shares in a 10-minute time frame derived from a 0.001 predetermined share value for one step or single movement (as coded in the system). Within the set time period, there are 50 users who produced a total of 500 human power shares. Hence 1000 cryptocurrencies are divided by 500, to reach a multiplier of 2. The user that produced 10 human power shares in the 10 minutes time frame will receive 20 crypto coins, which equals the multiplication between the individual human power shares and the multiplier.

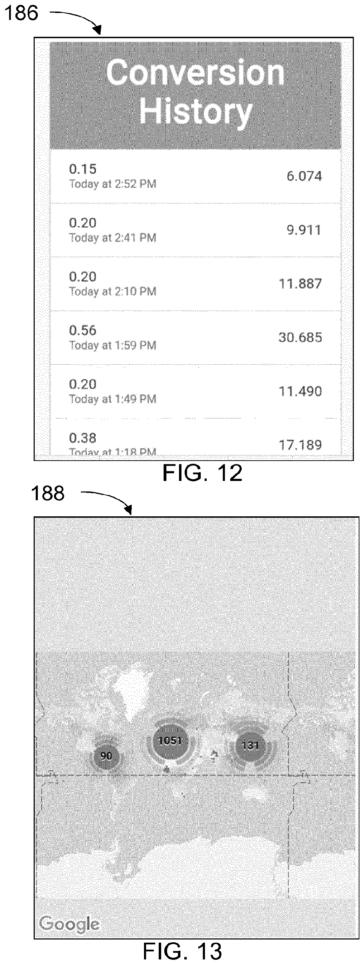

FIGs. 10 through 13 each illustrate a screen shot of the display unit of the mobile application. FIG. 10 illustrates a graphical representation of a chart 182 illustrating a total number of cryptocurrencies exchanged for coins, a total number of steps, calories burned, and a summary illustrated in the form of a bar chart. FIG. 11 illustrates a graphical representation of a chart 184 illustrating energy shares of one or more users based on daily activities such as walking. FIG. 12 illustrates a graphical representation of a chart 186 illustrating a conversion of energy shares into coins converted to cryptocurrency. FIG. 13 illustrates a graphical representation of a chart 188 illustrating a map of all users contributing to the total number of human power shares.

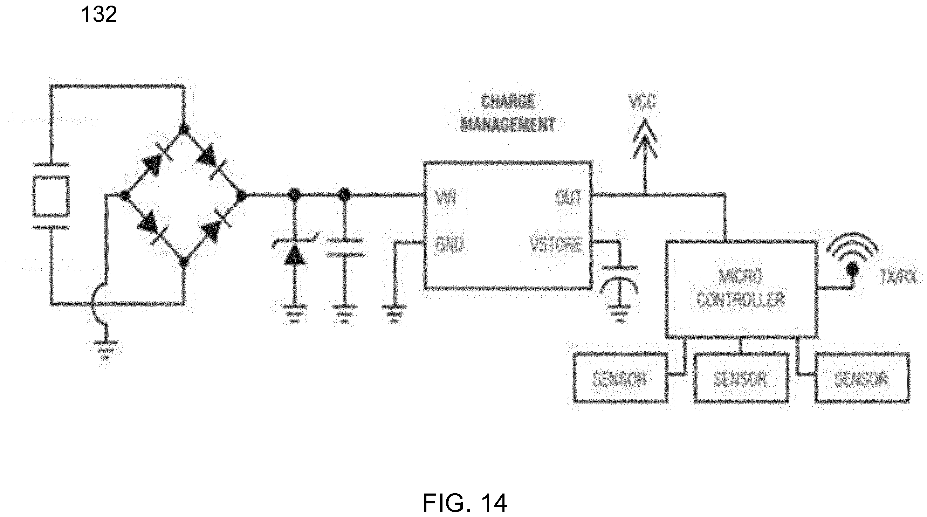

FIG. 14 illustrates an exemplary energy harvesting circuit, which can harvest kinetic energy to increase the life of the battery of a mobile device and may further contribute to saving energy when distributing cryptocurrencies according to the invention. In some embodiment of the present invention, the kinetic energy data is saved in the memory unit of the mobile device and communicated to the data server. If there is no communication link between the network and mobile device, it is contemplated the data is stored in the memory unit and transmitted automatically to the server when a connection becomes available.

FIG. 15 illustrates a block diagram of a system including an advertisement server according to an embodiment of the invention. According to an embodiment of the invention, advertisement server 500 is adapted to access the database 201 of data server 200. Based on the data accessed, the advertisement server 500 is selects and sends a targeted advertisement - text, image, video, audio - to the user mobile device 100 (FIG. 4). It is also contemplated that the advertisement server 500 can create and add to the database 201 of the data server 200 a task or assignment. Human power shares in relation to the advertisement task are determined and sent to the data server. Coins are assigned and exchanged for cryptocurrency available in a user's wallet application.

The methods including algorithms described according to the invention may be included directly in hardware or software programs, software applications executed by a processor, or in any combination. Software may reside in the RAM, a flash memory or a read-only memory (ROM), in a programmable memory (PROM) or in an EPROM, EEPROM, registers, hard disks, removable disks, compact disks or other form of storage medium known in the present state of the art. A storage medium, i.e., database, is combined with a processor so that the processor can read the information and write onto the storage medium. Alternatively, the storage medium may reside in a specific integrated circuit (ASIC). The ASIC may reside in a device, a computer, an operating terminal or a mobile device. Alternatively, the processor and the storage medium may reside as electronic components with a single circuit in a device, a computer, an operating terminal or a mobile device.

It will also be understood that the one or more computer-executable program code portions may be stored in a transitory or non-transitory computer-readable medium (e.g., a memory, and the like) that can direct a computer and/or other programmable data processing apparatus to function in a particular manner, such that the computer-executable program code portions stored in the computer-readable medium produce an article of manufacture, including instruction mechanisms which implement the steps and/or functions specified in the flowchart(s) and/or block diagram block(s).

The one or more computer-executable program code portions may also be loaded onto a computer and/or other programmable data processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s).

While the disclosure is susceptible to various modifications and alternative forms, specific exemplary embodiments of the invention have been shown by way of example in the drawings and have been described in detail. It should be understood, however, that there is no intent to limit the disclosure to the particular embodiments disclosed, but on the contrary, the intention is to cover all modifications, equivalents, and alternatives falling within the scope of the disclosure as defined by the appended claims.

Where possible, any terms expressed in the singular form are meant to also include the plural form and vice versa, unless explicitly stated otherwise. Also, the term "a" and/or "an" shall mean "one or more," even though the phrase "one or more" is also used herein.

Various operations may be described as multiple discrete operations in turn, in a manner that may be helpful in understanding embodiments of the present invention; however, the order of description should not be construed to imply that these operations are order dependent.

The terms "coupled" and "connected," along with their derivatives, may be used. It should be understood that these terms are not intended as synonyms for each other. Rather, in particular embodiments, "connected" may be used to indicate that two or more elements are in direct physical contact with each other. "Coupled" may mean that two or more elements are in direct physical or electrical contact. However, "coupled" may also mean that two or more elements are not in direct contact with each other, but yet still cooperate or interact with each other.

## Claims

1. A system for assigning crypto coins based on kinetic energy comprising:
a mobile device interacting over a network with one or more sensors, a data server, and a blockchain server, wherein one or more of the mobile device, the data server and the blockchain server includes a software program stored in one or more memory units and executable by one or more processors, the software program comprising steps to assign crypto coins based on sensor data, wherein the crypto coins are exchangeable for cryptocurrency.

2. The system according to claim 1, wherein the sensor data is related to movement of a user.

3. The system of claim 1, wherein the mobile device is a smart phone.

4. The system of claim 1, wherein the mobile device, the data server and the blockchain server communicate in real-time.

5. The system of claim 1, wherein the one or more sensors are built-in to the mobile device.

6. The system of claim 1, wherein the software program stored in one or more memory units comprises the steps of:
recording by the mobile device the sensor data from a user during a time period;
calculating by the data server a number of coins assigned;
transferring by the data server to the blockchain server the number of coins assigned;
exchanging by the blockchain server the number of coins assigned for cryptocurrency; and
adding by the blockchain server to a wallet application the cryptocurrency.

7. The system of claim 6, wherein the calculating step further comprises the steps of:
providing to the data server a predetermined quantity of crypto coins to disperse in the time period;
converting by the mobile device the sensor data of the user into power shares of the user by multiplying the sensor data by a predetermined share value;
computing by the data server a total number of power shares of all users;
determining by the data server a multiplier by dividing the predetermined quantity of crypto coins by the total number of power shares; and
calculating by the data server the number of coins assigned by multiplying the power shares of the user by the multiplier.

8. The system of claim 1, wherein the network is one or more selected from the group comprising: a global area network (GAN), a wide area network (WAN), a local area network (LAN).

9. The system of claim 1, wherein the one or more sensors and mobile device communicate using one or more selected from the group comprising: infrared (IR), radio frequency (RF), Bluetooth technology, near field communication (NFC), ultraband or Zigbee.

10. The system of claim 1, wherein the one or more sensors is one or more selected from the group comprising: a gyroscope, a biosensor, a motion sensor, a light sensor, a pressure sensor, an oximeter, a sweat sensor, a tactile sensor, a camera, a piezoelectric transducer, a pedometer, an accelerometer, a pulse sensor, a global positioning system (GPS), a magnetometer, a passive infrared (PIR) device, a smart watch, an altimeter, a barometer.

11. The system of claim 1, further comprising a power management unit configured to convert kinetic energy into electrical energy.

12. The system of claim 11, wherein the electrical energy is stored and used to extend the battery life of the mobile device.

13. The system of claim 1, wherein the predetermined quantity of crypto coins to disperse in the time period is based on a number of available users or a value of the cryptocurrency itself as evidenced by a cryptocurrency exchange market.

14. The system of claim 1 further comprising an advertisement server configured to select and send an advertisement to a user.

15. The system of claim 1, wherein the data server includes a task for completion with a predefined interval of time.

16. The system of claim 15, wherein the task is a physical activity.

17. The system of claim 16, wherein the task requires the user to maintain a body health parameter within a threshold level.

18. A method for assigning crypto coins based on kinetic energy, wherein a memory unit stores a software program executable by one or more processing units, the method comprising the steps of:
recording by a mobile device sensor data from a user during a time period;
calculating by a data server a number of coins assigned;
transferring by the data server to a blockchain server the number of coins assigned;
exchanging by the blockchain server the number of coins assigned for cryptocurrency; and
adding by the blockchain server to a wallet application the cryptocurrency.

19. The method of claim 18, wherein the calculating step further comprises the steps of:
providing to the data server a predetermined quantity of crypto coins to disperse in the time period;
converting by the mobile device the sensor data of the user into power shares of the user by multiplying the sensor data by a predetermined share value;
computing by the data server a total number of power shares of all users;
determining by the data server a multiplier by dividing the predetermined quantity of crypto coins by the total number of power shares; and
calculating by the data server the number of coins assigned by multiplying the power shares of the user by the multiplier.

20. The method of claim 18 further comprising the step of:
selecting by an advertisement server an advertisement for the user based on the sensor data.
